**Europäisches Patentamt**

**European Patent Office**

**Office européen des brevets**

(11) Veröffentlichungsnummer: **0 182 429 B1**

(12) **EUROPÄISCHE PATENTSCHRIFT**

(45) Veröffentlichungstag der Patentschrift: **26.02.92**

(21) Anmeldenummer: **85201835.7**

(22) Anmeldetag: **11.11.85**

(51) Int. Cl.⁵: **G01N 27/00**, G06F 15/42, A61B 6/02, G06F 15/62

(54) Verfahren und Anordnung zum Erzeugen von Schichtbildern eines Objektes.

(30) Priorität: **22.11.84 DE 3442448**

(43) Veröffentlichungstag der Anmeldung:
**28.05.86 Patentblatt 86/22**

(45) Bekanntmachung des Hinweises auf die Patenterteilung:
**26.02.92 Patentblatt 92/09**

(84) Benannte Vertragsstaaten:
**DE FR GB NL**

(56) Entgegenhaltungen:
**DE-A- 3 237 572**
**US-A- 3 499 146**

**PHYS. MED. BIOL., Band 21, Nr. 5, September 1976, Seiten 689-732; R.A. BROOKS: "Principles of computer assisted tomography (CAT) in radiographic and radioisotopic imaging"**

(73) Patentinhaber: **Philips Patentverwaltung GmbH**
**Wendenstrasse 35 Postfach 10 51 49**
**W-2000 Hamburg 1(DE)**
(84) Benannte Vertragsstaaten:

**DE**

(73) Patentinhaber: **N.V. Philips' Gloeilampenfabrieken**
**Groenewoudseweg 1**
**NL-5621 BA Eindhoven(NL)**
(84) Benannte Vertragsstaaten:
**FR GB NL**

(72) Erfinder: **Haaker, Paul Rudolf**
**Burgwedeltwiete 11**
**W-2000 Hamburg 61(DE)**
Erfinder: **Klotz, Erhard**
**Seekamp 110**
**W-2083 Halstenbek(DE)**
Erfinder: **Koppe, Reiner, Dr.**
**Rugenbergener Weg 3**
**W-2000 Hamburg 61(DE)**
Erfinder: **Linde, Rolf**
**Kamperrege 21**
**W-2081 Haseldorf(DE)**

(74) Vertreter: **Hartmann, Heinrich, Dipl.-Ing. et al**
**Philips Patentverwaltung GmbH Wendenstrasse 35 Postfach 10 51 49**
**W-2000 Hamburg 1(DE)**

**Beschreibung**

Die Erfindung betrifft ein Verfahren zum Erzeugen von Schichtbildern eines Objektes, das aus mehreren Strahlenquellenpositionen zur Erzeugung getrennter Einzelbilder durchstrahlt wird, wobei für jedes Einzelbild von der Absorption in seinen Bildpunkten abhängige Bildwerte in einem ersten Speicher gespeichert werden und für jeden Schichtbildpunkt ein der Absorption entsprechender Schichtbildwert aus den gespeicherten Bildwerten der dem Schichtbildpunkt geometrisch zugeordneten Bildpunkte abgeleitet wird sowie einer Anordnung zur Durchführung des Verfahrens.

Ein derartiges Verfahren ist aus der US-A-3,499,146 und aus der DE-A- 32 37 572 bekannt. Bei dem Verfahren nach der US-A- 3,499,146 wird der Schichtbildwert für einen Bildpunkt der Schicht durch Überlagerung der Bildwerte derjenigen Bildpunkte gebildet, die dem Schichtbildpunkt geometrisch zugeordnet sind. Bei dem Verfahren nach der DE-A- 32 37 572 wird der Schichtbildwert eines Schichtbildpunktes durch denjenigen Bildwert der ihm geometrisch zugeordneten Bildpunkte der Einzelbilder gebildet, der der geringsten Absorption entspricht. Obwohl die letztgenannte Art der Schichtbilderzeugung genauere Schichtbilder liefert, ist auch sie noch mit Fehlern behaftet.

Aufgabe der vorliegenden Erfindung ist es, ein Verfahren zu schaffen, daß mit geringem Speicheraufwand genauere Schichtbilder liefert.

Diese Aufgabe wird erfindungsgemäß dadurch gelöst, daß

a) zunächst die im ersten Speicher für jeden Bildpunkt jedes Einzelbildes gespeicherten Bildwerte in einen zweiten Speicher übernommen werden und ein dritter Speicher gelöscht wird,

b) für einen Schichtbildpunkt einer Schicht aus den im zweiten Speicher gespeicherten Werten der diesem Schichtbildpunkt geometrisch zugeordneten Bildpunkte ein Schichtbildwert gebildet wird,

c) der so gebildete Schichtbildwert im dritten Speicher zum Inhalt der Speicherstellen addiert wird, die den zugehörigen Bildpunkten zugeordnet sind,

d) die Schritte b) und c) für alle Schichtbildpunkte der Schicht wiederholt werden,

e) die Schritte b), c) und d) für eine Vielzahl von Schichten wiederholt werden, die das gesamte Objektvolumen erfassen,

f) für jeden Bildpunkt die Differenz des im ersten Speicher gespeicherten Bildwertes und des im dritten Speicher gespeicherten, mit einem Normierungsfaktor multiplizierten Wertes gebildet wird,

g) die Differenz dem im zweiten Speicher für den jeweiligen Bildpunkt gespeicherten Wert überlagert wird, und

h) anschließend der Schritt b) ausgeführt wird.

Die Erfindung basiert auf der Erkenntnis, daß nach Durchführung der Schritte b) bis e) im dritten Speicher für jeden Bildpunkt ein Wert gespeichert ist, der dem Bildwert dieses Punktes im ersten Speicher proportional sein müßte, wenn die Bilder der einzelnen Schichten nicht mit Fehlern behaftet wären. Die gemäß Schritt f) aus den für jeweils einen Bildpunkt gespeicherten Werten abgeleitete Differenz ist daher ein Maß für den Fehler bei der Erzeugung der Schichtbilder aus den im zweiten Speicher für die verschiedenen Bildpunkte gespeicherten Werten. Diese Differenz wird daher dazu benutzt, den im zweiten Speicher für diesen Bildpunkt gespeicherten Wert gemäß Schritt g) zu modifizieren. Wenn dies für alle Bildpunkte durchgeführt ist, sind im zweiten Speicher für jeden Bildpunkt jedes Einzelbildes Werte gespeichert, die in der Regel zwar nicht mehr mit den ursprünglichen Bildwerten übereinstimmen, mit deren Hilfe sich jedoch genauere Bilder emner Schicht erstellen lassen als mit Hilfe der im ersten Speicher gespeicherten Bildwerte der Bildpunkte.

Die Rekonstruktion des Objektes in Schichten, die das gesamte Objektvolumen erfassen, stellt praktisch eine dreidimensionale Rekonstruktion dar, mit deren Hilfe die Modifikation der im zweiten Speicher für die Bildpunkte der verschiedenen Einzelbilder gespeicherten Werte erfolgt. Trotz dieser dreidimensionalen Rekonstruktion ist der Speicherplatzbedarf relativ gering. Es werden lediglich drei Speicher benötigt, die für jeden Bildpunkt eines jeden Einzelbildes einen Speicherplatz aufweisen.

Eine Weiterbildung der Erfindung sieht vor, daß zwischen den Schritten g) und h) die Schritte b) bis g) mindestens noch einmal ausgeführt werden. Vor der erneuten Ausführung der Schritte b) und g) muß dabei allerdings der dritte Speicher gelöscht werden. Durch die mehrmalige Ausführung der Schritte b) und g) werden im Sinne eines iterativen Regelvorganges die im zweiten Speicher gespeicherten Werte immer mehr so modifiziert, daß die mit Hilfe dieser Werte erzeugten Schichtbilder immer genauer die tatsächliche Absorptionsverteilung in der Schicht darstellen.

Eine vorteilhafte Weiterbildung der Erfindung sieht vor, daß die Schichten so gewählt werden, daß jedem Schichtbildpunkt in jedem Einzelbild jeweils nur ein Bildpunkt geometrisch zugeordnet ist. An sich kann man die Schichten beliebig wählen, doch müssen dann in Regel mehrere Bildpunkte eines Einzelbildes zur Rekonstruktion eines Schichtbildpunktes herangezogen werden, wobei die diesen Bildpunkten zugeordneten Werte mit einem Gewicht eingehen, das von der Lage der Bildpunkte in bezug auf den zu rekonstruierenden Schichtbildpunkt abhängt. Dadurch wird der Aufwand wesentlich vergrößert. Nach der Weiterbildung ist von jedem Einzelbild jeweils nur ein Bildpunkt erforderlich, um den Bildwert des Schichtbildpunktes zu bestimmen.

Eine Anordnung zur Durchführung des Verfahrens nach Anspruch 1 ist mit einer Strahlenquellenanordnung zur Erzeugung mehrerer Einzelbilder des Objektes aus je einer Strahlenquellenposition, mit einem Bildwandler zum Umwandeln jedes Einzelbildes in ein elektrisches Signal bzw. in eine Folge von Bildwerten und mit einer ersten Speicheranordnung zur Speicherung dieser Bildwerte versehen und es ist vorgesehen, daß eine zweite Speicheranordnung zur Speicherung von modifizierten Bildwerten für jeden Bildpunkt jedes Einzelbildes vorgesehen ist, daß eine als Akkumulator betriebene dritte Speicheranordnung zur Speicherung von Schichtbildwerten für jeden Bildpunkt eines jeden Einzelbildes vorgesehen ist, daß eine erste Recheneinrichtung vorgesehen ist, die für jeden Bildpunkt die Differenz zwischen dem dafür in den dritten Speicher gespeicherten, mit einem Normierungsfaktor multiplizierten Wert und dem im ersten Speicher gespeicherten Bildwert bildet und diese Differenz zu dem Inhalt des diesem Bildpunkt im zweiten Speicher zugeordneten Speicherplatzes bildet, daß eine Schichtbildverarbeitungseinheit vorgesehen ist, die für eine Vielzahl von Schichten für jeden Schichtbildpunkt aus den im zweiten Speicher gespeicherten modifizierten Bildwerten der geometrisch zugeordneten Bildpunkte einen Schichtbildwert bildet, und daß eine zweite Recheneinrichtung vorgesehen ist, die die Schichtbildwerte im dritten Speicher zum Inhalt derjenigen Speicherplätze addiert, die den Bildpunkten zugeordnet sind, aus denen der jeweilige Schichtbildwert gebildet ist.

Die Erfindung wird nachstehend anhand der Zeichnung näher erläutert. Es stellen dar:

Fig. 1    eine Prinzipzeichnung einer erfindungsgemäßen Anordnung,

Fig. 2    die geometrischen Verhältnisse bei einer solchen Anordnung,

Fig. 3    ein Diagramm zur Veranschaulichung der einzelnen Schritte und

Fig. 4    ein Blockschaltbild eines Teils von Fig. 1.

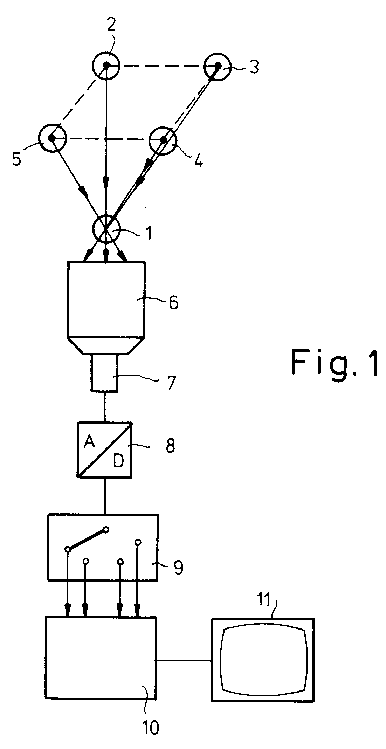

Gemäß Fig. 1 wird ein Objekt 1 von vier Strahlenquellen 2, 3, 4 und 5 z.B. Röntgenröhren durchstrahlt, deren Emissionszentren bzw. Brennflecke auf den Eckpunkten eines Quadrates liegen. Die vier Strahlenquellen senden im Betrieb Strahlenbündel aus, die in der Zeichnung durch jeweils eine Gerade veranschaulicht sind, die jedoch das gesamte Objekt erfassen und die sich in einer zu der Ebene des Quadrates parallelen Ebene, die vorzugsweise auch das Objekt 1 schneidet, praktisch decken. Die Strahlenquellen emittieren die Strahlung mit derselben Intensität und der gleichen Strahlungsdauer.

Die durch das Objekt 1 beeinflußte Röntgenstrahlung wird von einem Bildaufnehmer 6, z.B. einen Röntgenbildverstärker, dessen optische Achse senkrecht zur Ebene des Quadrates verläuft, in vier räumlich voneinander getrennte Einzelbilder umgesetzt derart, daß jedes Einzelbild das von jeweils einer der Strahlenquellen 2 bis 5 erzeugte Röntgenschattenbild des Objektes 1 darstellt. Die vier Einzelbilder werden durch eine Bildaufnahmeröhre 7 in ein elektrisches Signal umgesetzt, das mit Hilfe eines Analog-Digital-Wandlers 8 in eine Folge von binär kodierten Datenworten umgesetzt wird, die über einen Demultiplexer 9 einer Einheit 10 zur Erzeugung von Schichtbildern zugeführt wird, die mittels einer Bildwiedergabeeinheit 11 wiedergegeben werden.

Jedes der vom Analog-Digital-Wandler erzeugten Datenworte stellt den - von der Absorption abhängigen - Bildwert in einem kleinen Bereich eines Einzelbildes dar, der im folgenden vereinfachend als Bildpunkt bezeichnet wird. Jedes Einzelbild besteht aus einer Vielzahl solcher Bildpunkte - z.B. 512 Zeilen und 512 Spalten - , so daß der Analog-Digital-Wandler für jedes Einzelbild auch 512 x 512 Datenworte liefert.

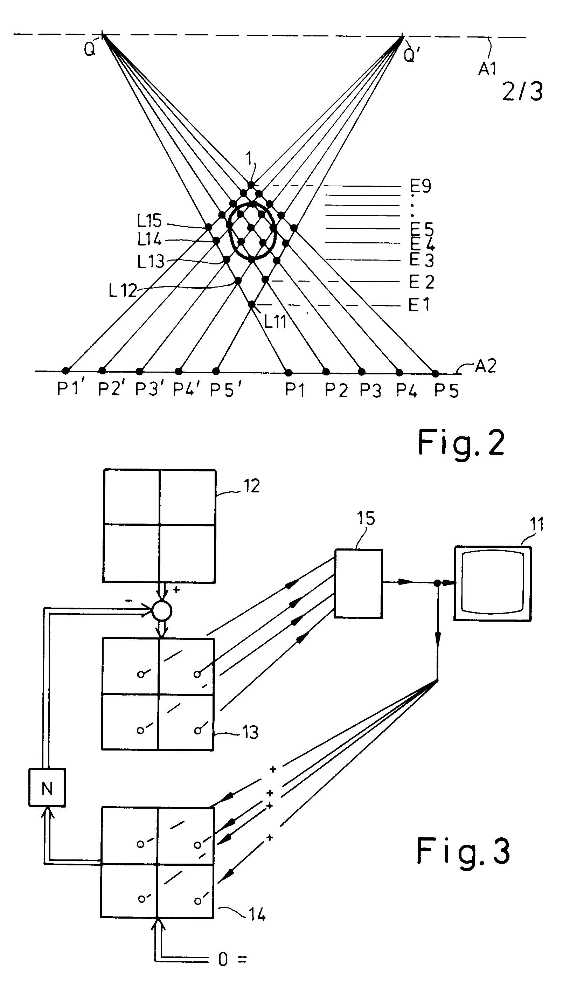

In Fig. 2 bezeichnet A1 die Ebene, in der sich die Strahlenquellen 2...5 befinden und A2 die Eingangsebene des Bildaufnehmers 6. In der Ebene A1 befinden sich zwei Strahlenquellen Q und Q', die je ein Strahlenbündel zur Durchstrahlung des Objektes 1 aussenden. In der Ebene A2 sind fünf in gleichen Abständen voneinander liegende Punkte P1...P5 dargestellt, die eine Zeile von Bildpunkten eines von der Quelle Q erzeugten Einzelbildes darstellen, wobei der Einfachheit angenommen ist, daß ein Einzelbild aus 5 x 5 Bildpunkten besteht. Ebenso sind fünf Bildpunkte P1'...P5' einer Zeile des von der Strahlenquelle Q' erzeugten Einzelbildes dargestellt. Die Strahlenquelle Q ist durch fünf Strahlen mit den ihr zugeordneten fünf Bildpunkten P1...P5 verbunden, d.h. mit den Mittelpunkten der Bildelemente, deren Absorption durch jeweils ein Datenwort charakterisiert ist. Das gleiche gilt für die Strahlenquelle Q' und die Bildpunkte P1'...P5'. Die beiden Strahlengruppen schneiden sich in einer Vielzahl von (Schichtbild-) Punkten, die in nur neun (Schicht-) Ebenen E1...E9 liegen. Dies gilt auch dann wenn man berücksichtigt, daß die Einzelbilder an sich zweidimensional sind und daß statt zweier Strahlenquellen deren vier auf den Eckpunkten eines Quadrates vorhanden sind. Bei n Bildpunkten in einer Zeile würden sich 2n-1 derartige Schichtebenen ergeben.

Die den einzelnen Schichtbildpunkten einer derartigen Schicht zugeordneten Werte können aus den Bildwerten der Einzelbildpunkte abgeleitet werden beispielsweise durch Summation oder Mittelwertbildung, wie in der US-A- 34 99 146 beschrieben. So wird beispielsweise der Schichtbildwert für den Schichtbildpunkt L15 in der Ebene E5 aus den Bildwerten der Bildpunkte P1 und P1' abgeleitet, der Wert für den daneben liegenden Schichtbildpunkt aus den Bildwerten der Bildpunkte P2 und P2' und der auf der anderen Seite außen liegende Schichtbildpunkt in dieser Ebene aus den Bildwerten der Bildpunkte P5 und P5'. Für diese Schicht werden die den Schichtbildpunkten zugeordneten Werte aus den Bildwerten der einander entsprechenden Bildpunkte z.B. P1, P1'; P2, P2' usw. gebildet. In der darunter befindlichen Schicht E4 wird beispielsweise der Schichtbildwert für den Schichtbildpunkt L14 aus den Bildwerten der Bildpunkte P1 und P2' bestimmt, für den daneben liegenden Punkt dieser Schicht werden die Bildwerte der Bildpunkte P2 und P3' herangezogen usw. Das heißt, die Werte für die Schichtbildpunkte für diese Schicht werden aus den Bildpunkten abgeleitet, die sich aus den um einen Bildpunkt versetzten Einzelbildern ergeben. Für die übernächste darunter liegende Schicht, die Schicht E3, ergeben sich die Schichtbildpunkte durch Versetzen der Einzelbilder um zwei Bildpunkte usw. Für die Schichtebenen E1...E9 läßt sich also jedes Schichtbild durch nur einen Bildpunkt in jedem Einzelbild definieren. Die Erfindung ist nicht darauf beschränkt, daß die Schichten so wie beschrieben liegen; jedoch müssen dann zur Ermittlung des Wertes eines Schichtbildpunktes pro Einzelbild mehrere Bildpunkte herangezogen werden, was den Rekonstruktionsaufwand wesentlich erhöht.

Wie Fig. 3 zu entnehmen ist, umfaßt die Einheit 10 (Fig. 1) drei Speicher 12, 13 und 14, von denen jeder soviel Speicherplätze hat, wie Bildpunkte in den vier Einzelbildern vorhanden sind. In den ersten Speicher 12 werden die vom Analog-Digital-Wandler 8 gelieferten, als binär kodierte Datenworte vorliegenden Bildwerte gespeichert. Zu Beginn werden diese Werte auch in den zweiten Speicher 13 übernommen, während der Inhalt des dritten Speichers 14 gelöscht wird.

Danach werden in einem Schichtbilddekodierer 15 für eine Schicht, z.B. die Schicht E5, aus den in dem zweiten Speicher 13 für die diesem Bildpunkt geometrisch zugeordneten Bildpunkte (P1, P1' und zwei weitere zu den in Fig. 2 nicht dargestellten Strahlenquellen gehörende Bildpunkte) gespeicherten Werte ein Schichtbildwert gebildet, der die Absorption des Objekte in dem Schichtbildpunkt L15 kennzeichnen soll. Die Bildung dieses Wertes im Schichtbilddekodierer kann durch Summierung der für die genannten Bildpunkte im zweiten Speicher 13 gespeicherten Werte erfolgen, durch Mittelwertbildung, durch Auswahl des kleinsten bzw. größten Wertes oder auf andere Weise. Der auf diese Weise für einen Schichtbildpunkt (L15) bestimmte Schichtbildwert wird in dem dritten Speicher 14 zum Inhalt der Speicherplätze addiert, die zu den geometrisch zugeordneten Bildpunkten (P1, P1',...) gehören. Dies wird für alle Punkte der Schicht (E5) wiederholt. Danach ist im Speicher 14 das Bild der ersten Schicht (E5) gespeichert.

Das vom Dekodierer 15 ermittelte Schichtbild kann zugleich auch einer Wiedergabeeinheit 11 zugeführt werden, so daß das (zunächst noch mit Fehlern behaftete) Schichtbild vom Benutzer schon während des Verarbeitungsvorganges betrachtet werden kann.

Anschließend wird eine andere Schicht bearbeitet, z.B. die Schicht E4. Der von dem Schichtbilddekodierer 14 für einen Punkt dieser Schicht, z.B. den Punkt L14, gebildete Wert wird wiederum zum Inhalt der Speicherplätze addiert, die zu Bildpunkten gehören, die diesem Schichtbildpunkt geometrisch zugeordnet sind (z.B. P1, P2'). Nachdem auch diese Schicht auf die geschilderte Weise verarbeitet ist, folgen weitere Schichten, bis sämtliche Schichten E1...E9 verarbeitet sind. In dem einem Bildpunkt eines Einzelbildes zugeordneten Speicherplatz befindet sich dann die Summe der Werte, die von dem Schichtbilddekodierer für die diesem Bildpunkt geometrisch zugeordneten Schichtbildpunkte berechnet worden ist; beispielsweise enthält der Speicherplatz für P1 die Summe der für die Punkte L11...L15 berechneten Schichtbildwerte.

Wenn in die vom Schichtbilddekodierer 15 erzeugten Schichtbilder die Absorption nur solcher Strukturen eingine, die in der Schicht liegen, würde die im dritten Speicher 14 für die einzelnen Bildpunkte der Einzelbilder gespeicherten Summe bis auf einen für alle Bildwerte gleichen Normierungsfaktor den im ersten Speicher 12 für diese Bildpunkte gespeicherten Bildwerten entsprechen. Diese Voraussetzung ist bei den bisher bekanten Schichtbilddekodierern in der Regel nicht erfüllt. Wenn beispielsweise der Wert für einen Schichtbildpunkt aus der Summe bzw. aus dem Mittelwert der Werte gebildet wird, die zu dem dem jeweiligen Schichtbildpunkt geometrisch zugeordneten Bildpunkten gehören, enthält das Bild einer Schicht die Strukturen aller anderen Schichten, wenn auch mehr oder weniger unscharf.

Die durch das Fehlen dieser Voraussetzung bedingten Abweichungen zwischen dem in dem ersten Speicher 12 und dem dritten Speicher 14 für einen Bildpunkt gespeicherten Bildwerten bzw. Summen wird bei der Erfindung dazu benutzt, im zweiten Speicher 13 die Bildwerte so zu modifizieren, daß ein aufgrund der modifizierten Werte hergestelltes Schichtbild die tatsächliche Absorptionsverteilung in der Schicht schon besser wiedergibt.

Zu diesem Zweck wird für jeden Bildpunkt die Differenz zwischen den im ersten Speicher 12 gespeicherten Bildwert und dem im dritten Speicher 14 für den gleichen Bildpunkt gespeicherten, mit einem Normierungsfaktor N multiplizierten Summenwert gebildet. Diese Differenz wird im zweiten Speicher 13 zum Inhalt des Speicherplatzes addiert, der dem selben Bildpunkt des gleichen Einzelbildes zugeordnet ist. - Der Normierungsfaktor hängt von der Arbeitsweise des Schichtbilddekodierers 15 ab. Arbeitet der Schichtbilddekodierer 15 beispielsweise nach dem Prinzip der Mittelwertbildung, dann ist der im dritten Speicher 14 für einen Bildpunkt gespeicherte Summenwert um einen Faktor zu groß, der der Zahl der Bildpunkte in einer Reihe entspricht. Bei dem in Fig. 2 dargestellten Ausführungsbeispiel mit nur fünf Bildpunkten müßte der Summenwert daher mit dem Faktor N = 0,2 multipliziert werden. Es ergibt sich aber auch dann eine Verbesserung, wenn der Normierungsfaktor nicht exakt dem Idealwert entspricht. Jedoch ist diese Verbesserung nicht ganz so groß.

Nachdem auf diese Weise die im zweiten Speicher 13 für sämtliche Bildpunkte gespeicherten Werte modifiziert worden sind, wird der dritte Speicher 14 gelöscht und der beschriebene Zyklus kann von neuem beginnen. Aufgrund der Modifikation der im zweiten Speicher gespeicherten Signale ergeben sich jedoch bessere Schichtbilder. Diese Verbesserung ist um so ausgeprägter, je öfter der beschriebene Zyklus durchlaufen wird.

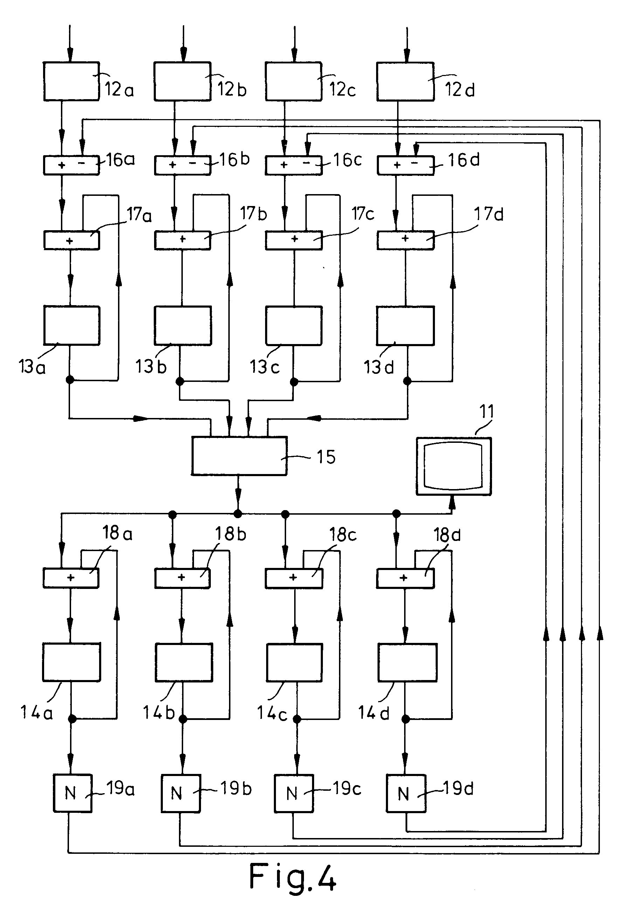

Fig. 4 zeigt ein Blockschaltbild der Einheit 10 mit den wesentlichen Komponenten. Der erste Speicher 12 besteht danach aus vier einzelnen Teilspeichern 12a...12b, deren Eingänge mit den Ausgängen des Demultiplexers 9 (Fig. 1) verbunden sind. Jeder Teilspeicher hat soviel Speicherplätze wie ein Einzelbild Bildpunkte hat. Jeder der Teilspeicher 12a...12d ist über eine erste arithmetische Einheit 16a...16d und eine zweite arithmetische Einheit 17a...17d mit vier Teilspeichern 13a...13d verbunden. Die vier Teilspeicher 13a...13d bilden zusammen den zweiten Speicher 13. Die Ausgänge der Speicher sind mit einem Schichtbilddekodierer 15 gekoppelt, der z.B. ein Addierer sein kann, dessen Ausgang über arithmetische Einheiten 18a...18d mit den Teilspeichern 14a...14d verbunden ist, die zusammen den dritten Speicher bilden. Die Ausgänge der Speicher 14a...14d sind über Multiplizierschaltungen, die die Speicherausgangssignale einer Normierung unterziehen, mit den invertierenden Eingängen der arithmetischen Einheiten 16a...16d verbunden. Die Steuerung der in Fig. 4 dargestellten Schaltung erfolgt mittels einer nicht näher dargestellten Steuereinheit auf folgende Weise:
Vor Beginn einer Röntgenaufnahme werden zunächst alle Speicher 12a...12d, 13a...13d, 14a...14d gelöscht. Nach der gleichzeitigen oder aufeinander folgenden Einschaltung der vier Strahler 2...5 werden die vom Analog-Digital-Wandler 8 gelieferten Datenworte über den Demultiplexer den vier Teilspeichern 12a...12d des ersten Speichers in der Weise zugeführt, daß jeder dieser Teilspeicher ein Einzelbild enthält, wobei die Speicherplätze, die die Bildwerte einander entsprechender Bildpunkte aufnehmen, zweckmäßigerweise die gleiche Adresse aufweisen.

Die auf diese Weise dem ersten Speicher 12a...12d zugeführten Bildwerte werden außerdem über die arithmetischen Einheiten 16a...16d und 17a...17d zum Inhalt der in dem zweiten Speicher 13a...13d mit der gleichen Adresse versehenen Speicherplätze addiert. Da der zweite Speicher 13a...13d und der dritte Speicher 14a...14d zuvor gelöscht waren, bedeutet dies, daß der Inhalt des Teilspeichers 12a in den Teilspeicher 13a, der Inhalt des Teilspeichers 12b in den Teilspeicher 13b übernommen wird usw. Danach enthält jeder Teilspeicher zunächst die Bildwerte eines Einzelbildes.

Anschließend wird der Inhalt derjenigen Speicherplätze aufgerufen, die zu Bildpunkten gehören, die geometrisch einem Schichtbildpunkt zugeordnet sind, z.B. die dem Schichtbildpunkt L15 zugeordneten Werte P1, P1'.... Die dafür erforderliche Adressierung der Speicherplätze kann entsprechend durchgeführt werden wie in Verbindung mit der DE-A- 32 37 572, insb. Fig. 4, beschrieben. Der Schichtbilddekoder 15 bildet daraus beispielsweise durch Summierung einen Schichtbildwert, der über die arithmetischem Einheiten 18a...18d den Teilspeichern 14a...14d zugeführt und dort unter den gleichen Adressen abgespeichert wird, unter denen die Werte aus den Speichern 13a...13d aufgerufen wurden. Dies wird für alle Schichtbildpunkte einer Schicht wiederholt, wonach die Schichtbildpunkte einer zweiten Schicht verarbeitet werden. Die dabei erzeugten Schichtbildwerte werden dann mittels der arithmetischen Einheiten 18a...18d zum Inhalt der Speicherplätze addiert, deren Adressen den Adressen der zuvor in den Teilspeichern 13a...13d aufgerufenen Werte entsprechen. Sind auf diese Weise sämtliche Schichten abgearbeitet, werden in jedem der Teilbildspeicher 14a...14d die den einzelnen Bildpunkten zugeordneten Werte nacheinander aufgerufen, in einer der Schaltungen 19a...19d mit einem Normierungsfaktor gewichtet und in einer der arithmetischen Einheiten 16a...16d von dem in einem der Teilspeicher 12a...12d gespeicherten Bildwert für denselben Bildpunkt subtrahiert. Die so gebildete Differenz wird in den Einheiten 17a...17d zum Inhalt desjenigen Speicherplatzes addiert, der dieselbe Adresse hat bzw. dem gleichen Bildpunkt zugeordnet ist.

Bevor dann aus den so modifizierten Werten in den Teilspeichern 13a...13d erneut die Werte von bestimmten Schichtbildpunkten ermittelt werden, werden die Teilspeicher 14a...14d gelöscht. Danach beginnt der schon beschriebene Zyklus (Erzeugen von Schichtbildern, Addition der zu den gleichen Bildpunkten gehörenden Schichtbildwerte in den Teilspeichern 14a...14d, Normierung der Summenwerte, Vergleich mit den Bildwerten, Addition der Differenz zum Inhalt der (modifizierten) Werte in den Teilspeichern 13a...13d, usw.) von neuem. Die dann mit Hilfe der erneut modifizierten Werte in den Teilspeichern 13a...13d erzeugten Schichtbilder geben die Absorptionsverteilung in der jeweiligen Schicht noch besser wieder. Der beschriebene Zyklus kann mehrmals wiederholt werden.

Schon während der einzelnen Zyklen können die erzeugten Schichtbilder mit der Wiedergabeeinheit 11 wiedergegeben werden, was voraussetzt, daß diese mit einem Speicher für die Schichtbildpunkte versehen ist. Der Benutzer kann dann den Verarbeitungszyklus in einem bestimmten Stadium abbrechen. Es ist aber auch möglich, von vornherein eine bestimmte Anzahl von Verarbeitungszyklen vorzugeben.

Grundsätzlich könnten die Schaltungen 19a...19d, durch die der Inhalt der Teilspeicher 14a...14d mit dem Normierungsfaktor N gewichtet wird, auch zwischen dem Schichtbilddekodierer 15 und den arrhythmetischen Einheiten 18a...18d oder zwischen diesen und den Teilspeichern angeordnet sein. Die einzelnen, den Teilspeichern 14a...14d zugeführten Werte wären dann jedoch kleiner, was Rundungsfehler verstärken würde.

Im Ausführungsbeispiel nach Fig. 1 wurde davon ausgegangen, daß vier Strahlenquellen benutzt werden. Es ist jedoch auch möglich, eine andere Anzahl von Strahlenquellen zu verwenden, die auf den Eckpunkten eines regelmäßigen quadratischen Rasters verteilt sind - z.B. neun oder sechzehn. Bei einer größeren Anzahl von Strahlenquellen würde dies aber einen höheren Aufwand für die Bilderzeugung und Verarbeitung bedeuten.

**Patentansprüche**

1. Verfahren zum Erzeugen von Schichtbildern eines Objektes, das aus mehreren Strahlenquellenpositionen zur Erzeugung getrennter Einzelbilder durchstrahlt wird, wobei für jedes Einzelbild von der Absorption in seinen Bildpunkten abhängige Bildwerte in einem ersten Speicher gespeichert werden und für jeden Schichtbildpunkt ein der Absorption entsprechender Schichtbildwert aus den gespeicherten Bildwerten der dem Schichtbildpunkt geometrisch zugeordneten Bildpunkte abgeleitet wird,
dadurch gekennzeichnet, daß
   a) zunächst die im ersten Speicher für jeden Bildpunkt (z.B. P1, P2...;P1', P2'...) jedes Einzelbildes gespeicherten Bildwerte in einen zweiten Speicher (13; 13a...13d) übernommen werden und ein dritter Speicher (14; 14a...14d) gelöscht wird,
   b) für einen Schichtbildpunkt (z.B. L15) einer Schicht (E5) aus den im zweiten Speicher gespeicherten Werten der diesem Schichtbildpunkt geometrisch zugeordneten Bildpunkte P1, P1'...) ein Schichtbildwert gebildet wird,
   c) der so gebildete Schichtbildwert im dritten Speicher (14; 14a...14d) zum Inhalt der Speicherstellen addiert wird, die den zugehörigen Bildpunkten (P1, P1'...) zugeordnet sind,
   d) die Schritte b) und c) für alle Schichtbildpunkte der Schicht wiederholt werden,
   e) die Schritte b), c) und d) für eine Vielzahl von Schichten E1...E9) wiederholt werden, die das gesamte Objektvolumen (1) erfassen,
   f) für jeden Bildpunkt die Differenz des im ersten Speicher gespeicherten Bildwertes und des im dritten Speicher gespeicherten, mit einem Normierungsfaktor (N) multiplizierten Wertes gebildet wird,
   g) die Differenz dem im zweiten Speicher für den jeweiligen Bildpunkt gespeicherten Wert überlagert wird, und
   h) anschließend der Schritt b) ausgeführt wird.

2. Verfahren nach Anspruch 1,
   dadurch gekennzeichnet, daß zwischen den Schritten g) und h) die Schritte b) bis g) mindestens noch einmal ausgeführt werden.

3. Verfahren nach einem der vorhergehenden Ansprüche,
   dadurch gekennzeichnet, daß die Schichten so gewählt werden, daß jedem Schichtbildpunkt in jedem Einzelbild jeweils nur ein Bildpunkt geometrisch zugeordnet ist.

4. Anordnung zur Durchführung des Verfahrens nach Anspruch 1 mit einer Strahlenquellenanordnung (2...5) zur Erzeugung mehrerer Einzelbilder des Objektes aus je einer Strahlenquellenposition, mit einem Bildwandler (6, 7) zum Umwandeln jedes Einzelbildes in ein elektrisches Signal bzw. in eine Folge von Bildwerten und mit einer ersten Speicheranordnung (12; 12a...12d) zur Speicherung dieser Bildwerte,
   dadurch gekennzeichnet, daß eine zweite Speicheranordnung (13; 13a...13d) zur Speicherung von modifizierten Bildwerten für jeden Bildpunkt (P1...P5; P1'...P5') jedes Einzelbildes vorgesehen ist, daß eine als Akkumulator betriebene dritte Speicheranordnung (14; 14a...14d) zur Speicherung von Schichtbildwerten für jeden Bildpunkt eines jeden Einzelbildes vorgesehen ist, daß eine erste Recheneinrichtung (16a...16d; 17a...17d) vorgesehen ist, die für jeden Bildpunkt die Differenz zwischen dem dafür in den dritten Speicher (14a...14d) gespeicherten, mit einem Normierungsfaktor (N) multiplizierten Wert und dem im ersten Speicher (12a...12d) gespeicherten Bildwert bildet und diese Differenz zu dem Inhalt des diesem Bildpunkt im zweiten Speicher (13a...13d) zugeordneten Speicherplatzes bildet, daß eine Schichtbildverarbeitungseinheit (15) vorgesehen ist, die für eine Vielzahl von Schichten für jeden Schichtbildpunkt aus den im zweiten Speicher gespeicherten modifizierten Bildwerten der geometrisch zugeordneten Bildpunkte einen Schichtbildwert bildet, und daß eine zweite Recheneinrichtung (18a...18d) vorgesehen ist, die die Schichtbildwerte im dritten Speicher zum Inhalt derjenigen Speicherplätze addiert, die den Bildpunkten zugeordnet sind, aus denen der jeweilige Schichtbildwert gebildet ist.

**Claims**

1. A method of producing tomographical images of an object which is irradiated from a plurality of radiation source positions in order to form separate single images, for each single image there being stored in a first memory image values which are dependent on the absorption in its image points, whilst for each tomographical image point a tomographical image value which corresponds to the absorption is derived from the stored image values of the image points which are geometrically associated with the tomographical image point, characterized in that

    a) first the image values stored in the first memory for each image point (for example, P1, P2, ...; P1', P2', ...) of each single image are transferred to a second memory (13; 13a...13d), whilst a third memory (14; 14a...14d) is erased,

    b) a tomographical image value is formed for a tomographical image point (for example, L15) of a layer (E5) from the values, stored in the second memory, of the image points (P1, P2'...) which are geometrically associated with the relevant tomographical image point,

    c) the tomographical image value thus formed is added to the contents of the storage locations in the third memory (14; 14a...14d) which are associated with the relevant image points (P1, P1'...),

    d) the steps b) and c) are repeated for all tomographical image points of the layer,

    e) the steps b), c) and d) are repeated for a plurality of layers (E1...E9) which cover the entire object volume (1),

    f) for each image point the difference is formed between the image value stored in the first memory and the value stored in the third memory and multiplied by a standardization factor (N),

    g) the difference is superposed on the value stored in the second memory for the relevant image point, and

    h) subsequently, the step b) is performed.

2. A method as claimed in Claim 1, characterized in that the steps b) to g) are performed at least once more between the steps g) and h).

3. A method as claimed in any one of the preceding Claims, characterized in that the layers are chosen so that each time only one image point is geometrically associated with each tomographical image point in each single image.

4. A device for performing the method claimed in Claim 1, provided with a radiation source array (2...5) for generating a plurality of single images of the object from each time one radiation source position, with an image converter (6, 7) for converting each single image into an electric signal or a series of image values, and with a first memory device (12; 12a...12d) for storaging these image values, characterized in that there are provided a second memory device (13; 13a...13d) for the storage of modified image values for each image point (P1...P5; P1'...P5') of each single image, a third memory device (14; 14a...14d) which operates as an accumulator for the storage of tomographical image values for each image point of each single image, a first arithmetic device (16a...16d, 17a...17d) which forms for each image point the difference between the value stored for this point in the third memory (14a...14d) and multiplied by a standardization factor (N) and the image value stored in the first memory (12a...12d), said difference being added to the contents of the storage location which is associated with this image point in the second memory (13a...13d), there also being provided a tomographical image processing unit (15) which forms a tomographical image value for a plurality of layers for each tomographical image point from the modified image values, stored in the second memory, of the geometrically associated image points, as well as a second arithmetic device (18a...18d) which adds the tomographical image values in the third memory to the contents of the storage locations which are associated with the image points wherefrom the relevant tomographical image value is formed.

## Revendications

1. Procédé de production de tomographies d'un objet qui est exposé au rayonnement à partir de plusieurs positions de sources de rayonnement en vue de produire des images individuelles séparées, suivant lequel pour chaque image individuelle, des valeurs d'image dépendant de l'absorption dans ses points d'image sont stockées dans une première mémoire et, pour chaque point d'image tomographique, une valeur d'image tomographique correspondant à l'absorption est dérivée des valeurs d'image stockées des points d'image géométriquement associés au point d'image tomographique, caractérisé en ce que :

   a) tout d'abord les valeurs d'image stockées dans la première mémoire pour chaque point d'image (par exemple P1, P2, ...; P1', P2', ...) de chaque image individuelle sont reprises dans une deuxième mémoire (13; 13a, ..., 13d) et une troisième mémoire (14; 14a, ..., 14d) est effacée;

   b) pour un point d'image tomographique (par exemple L15) d'une tranche (E5), une valeur d'image tomographique est formée à partir des valeurs stockées dans la deuxième mémoire des points d'image (P1, P1', ...) géométriquement associés à ce point d'image tomographique;

   c) la valeur d'image tomographique ainsi formée est additionnée dans la troisième mémoire au contenu des emplacements de mémoire qui sont attribués aux points d'image associés P1, P1', ...);

   d) les pas b) et c) sont répétés pour tous les points d'image tomographique de la tranche;

   e) les pas b), c) et d) sont répétés pour un grand nombre de tranches (E1, ..., E9) qui couvrent l'ensemble du volume de l'objet;

   f) pour chaque point d'image est formée la différence entre la valeur d'image stockée dans la première mémoire et la valeur stockée dans la troisième mémoire qui est multipliée par un facteur de normalisation (N);

   g) la différence est superposée à la valeur stockée dans la deuxième mémoire pour le point d'image en question, et

   h) ensuite le pas b) est exécuté.

2. Procédé suivant la revendication 1, caractérisé en ce qu'entre les pas g) et h), les pas b) à g) sont exécutés encore au moins une fois.

3. Procédé suivant l'une quelconque des revendications précédentes, caractérisé en ce que les tranches sont choisies telles qu'à chaque point d'image tomographique de chaque image individuelle, ne soit chaque fois géométriquement associé qu'un seul point d'image.

4. Agencement pour l'exécution du procédé selon la revendication 1, pourvu d'un montage de sources de rayonnement (2, ..., 5) pour la production de plusieurs images individuelles de l'objet, chaque fois à partir d'une position de source de rayonnement, d'un convertisseur d'image (6, 7) pour convertir chaque image individuelle en un signal électrique ou en une séquence de valeurs d'image et d'un premier montage de mémoire (12; 12a, ..., 12d) pour stocker ces valeurs d'image, caractérisé en ce qu'un second montage de mémoire (13; 13a, ..., 13d) est prévu pour stocker des valeurs d'image modifiées pour chaque point d'image (P1, ..., P5; P1', ..., P5') de chaque image individuelle, qu'un troisième montage de mémoire (14; 14a, ..., 14d) mis en oeuvre comme accumulateur est prévu pour stocker des valeurs d'image tomographique pour chaque point d'image de chaque image individuelle, qu'un premier dispositif de calcul (16a, ..., 16d; 17a, ..., 17d) est prévu pour former, pour chaque point d'image, la différence entre la valeur stockée pour ce point dans la troisième mémoire (14a, ..., 14d) et multipliée par un facteur de normalisation (N) et la valeur d'image stockée dans la première mémoire (12a, ..., 12d) et pour superposer cette différence au contenu de l'emplacement de mémoire attribué à ce point d'image dans la deuxième mémoire (13a, ..., 13d), qu'une unité de traitement d'image tomographique (15) est prévue pour former, pour un grand nombre de tranches, pour chaque point d'image tomographique, une valeur d'image tomographique à partir des valeurs d'image modifiées stockées dans la deuxième mémoire pour les points d'image géométriquement associés et qu'un deuxième dispositif de calcul (18a, ..., 18d) est prévu pour additionner les valeurs d'image tomographique dans la troisième mémoire au contenu de ceux des emplacements de mémoire qui sont attribués aux points d'image à partir desquels la valeur d'image tomographique en question est formée.

Fig.1

2/3

Fig. 2

Fig. 3

Fig.4